# EUROPEAN PATENT SPECIFICATION

(11) **EP 3 499 635 B1**
(45) Date of publication and mention of the grant of the patent: **14.04.2021**
(21) Application number: 18202960.3
(22) Date of filing: 26.10.2018
(51) Int. Cl.: H01M 10/653, H01M 10/613

(54) **BATTERY PACK MANUFACTURING METHOD**
VERFAHREN ZUR HERSTELLUNG EINES BATTERIEPACKS
PROCÉDÉ DE FABRICATION DE BLOC-BATTERIE

(30) Priority: 13.12.2017 JP 2017238743
(43) Date of publication of application: 19.06.2019
(73) Proprietor: TOYOTA JIDOSHA KABUSHIKI KAISHA, Toyota-shi, Aichi 471 8571 (JP)
(72) Inventor: YAMASHITA, Aki, Toyota-shi, Aichi 471-8571 (JP)
(74) Representative: J A Kemp LLP

(56) References cited:
- CN-U- 204 638 463
- GB-A- 1 421 067
- US-A1- 2016 093 932
- US-A1- 2016 168 037

## Description

### BACKGROUND OF THE INVENTION

### 1. Field of the Invention

The present invention relates to a battery pack manufacturing method.

### 2. Description of Related Art

A battery pack including a cell stack, such as a fuel cell, generates heat by reaction and therefore needs to be cooled. Japanese Patent Application Publication No. 2013-033668 (JP 2013-033668 A) discloses a configuration in which a cooled portion that is at least a part of a surface of a cell stack extending along a stacking direction of single cells (a bottom surface of the cell stack) is in contact with a cooler having a refrigerant flow passage, with a heat-conducting sheet interposed between the cooled portion and the cooler.

US 2016/168037 discloses a method for manufacturing a thermal interface material. The thermal interface material including a thermal conductive filler, a polymer matrix having an elastic force and applied to the thermal conductive filler, and an insulating coating layer applied to sides of the thermal conductive filler and the polymer matrix may be manufactured by: providing the thermal conductive filler in a plate film form as a filler material forming the thermal conductive filler is dissolved in a solvent; and coating the thermal conductive filler in a plate film form with the polymer matrix. As such, the high heat radiation thermal interface material (a maximum of thermal conductivity of 20 W/mK) may be manufactured in more various thickness than the conventional thermal interface material (a maximum of thermal conductivity of 5 W/mK).

CN 204,638,463(U) discloses a heat-conducting cream coating unit, including a heat-conducting cream deposit barrel system and an atmospheric pressure generation system.

US 2016/093932 discloses a battery system with a battery module having electrochemical cells inside of a housing. The housing includes a first side and a second side opposite to the first side. The battery module includes a heat sink coupled with the second side of the housing and a thermal interface disposed between, and in contact with, the heat sink and the electrochemical cells. The thermal interface contacts base ends of the electrochemical cells. The system includes a cage disposed about the battery module. The cage includes a cage side positioned next to the second side of the housing and having openings disposed in the cage side. The openings enable air to be drawn into the cage. The air passes over the heat sink of the battery module.

GB 1,421,067 discloses a heat transfer composition in pre-shaped taped form comprises a release sheet to which is strippably adhered a thermo-setting, plastic material.

### SUMMARY OF THE INVENTION

For manufacturing reasons, cell stacks of battery packs are subject to some variations in the surface roughness of the cooled portion. When the surface roughness of the cooled portion of the cell stack is high, the configuration disclosed in JP 2013-033668 A may fail to secure a sufficient area of contact between the cooled portion and the heat-conducting sheet, resulting in lower cooling efficiency.

As a countermeasure, the inventor of the present application considered using a viscous body layer, instead of a heat-conducting sheet, in order to allow close contact with the cooled portion of single cells even when the surface roughness of this cooled portion is relatively high. It was found, however, that air getting entrapped between the viscous body layer and the single cells in the process of disposing the cell stack onto the viscous body layer might interfere with securing a sufficient area of contact between the cell stack and the viscous body layer, resulting in lower cooling efficiency.

The present invention provides a battery pack manufacturing method that can reduce entrapment of air between a cooled portion of a cell stack and a viscous body layer.

A first aspect of the present invention is a manufacturing method of a battery pack which includes a cell stack that is a stack of a plurality of single cells and a cooler that includes a refrigerant flow passage, and in which a cooled portion that is at least a part of a surface of the cell stack extending along a stacking direction of the single cells is attached to the cooler, with a viscous body layer interposed between the cooled portion and the cooler. The manufacturing method includes: forming the viscous body layer on the cooler such that an opposed surface of the viscous body layer facing the cooled portion has a vertex at which a perpendicular distance from a surface of the viscous body layer opposed to the opposed surface is longest, and that the perpendicular distance decreases continuously and monotonically in directions away from the vertex, as seen in a sectional view of the viscous body layer from a long-side direction of the viscous body layer; and before hardening of the viscous body layer on the cooler is completed, attaching the cell stack to the cooler while pressing the opposed surface of the viscous body layer with the cooled portion.

When the viscous body layer is thus configured such that the opposed surface facing the cell stack has the vertex at which the perpendicular distance from the surface on the opposite side from the opposed surface is longest, and that the perpendicular distance decreases continuously and monotonically in the directions away from the vertex, as seen in a sectional view of the viscous body layer from the long-side direction, a vertex portion of the opposed surface of the viscous body layer comes in contact with the cooled portion of the cell stack first when the cell stack is attached to the cooler. Then, in the process of being squeezed, the viscous body layer gradually increases the area of contact with the cooled portion of the cell stack while pushing out air toward both sides with respect to the vertex portion of the opposed surface of the viscous body layer. Thus, entrapment of air between the cooled portion of the cell stack and the viscous body layer can be reduced.

In forming the viscous body layer in the first aspect, the viscous body layer may be formed on the cooler such that the opposed surface protrudes in an arc shape having a central angle within a range of 10° to 35° as seen in a sectional view of the viscous body layer from the long-side direction.

When the viscous body layer is thus configured such that the opposed surface facing the cell stack protrudes in an arc shape having a central angle within a range of 10° to 35° as seen in a sectional view of the viscous body layer from the long-side direction, the vertex portion of the arc of the opposed surface of the viscous body layer comes in contact with the cooled portion of the cell stack first when the cell stack is attached to the cooler. Then, in the process of being squeezed, the viscous body layer gradually increases the area of contact with the cooled portion of the cell stack while pushing out air toward both sides with respect to the vertex of the arc of the opposed surface of the viscous body layer. Thus, entrapment of air between the cooled portion of the cell stack and the viscous body layer can be reduced.

In the first aspect, the viscous body layer may be formed on the cooler such that the opposed surface protrudes in the arc shape having the central angle within a range of 20° to 35° as seen in the sectional view. Thus, entrapment of air between the cooled portion of the cell stack and the viscous body layer can be reduced.

A second aspect of the present invention is a manufacturing apparatus of a battery pack which includes a cell stack that is a stack of a plurality of single cells and a cooler that includes a refrigerant flow passage, and in which a cooled portion that is at least a part of a surface of the cell stack extending along a stacking direction of the single cells is attached to the cooler, with a viscous body layer interposed between the cooled portion and the cooler. The manufacturing apparatus includes a viscous body layer forming device configured to form the viscous body layer on the cooler by discharging a viscous body from a nozzle, and an attaching device that attaches the cell stack to the cooler. An opening of a discharge port of the nozzle is in an arc shape having a central angle within a range of 10° to 35° toward a downstream side in a film formation direction in forming the viscous body layer. The attaching device is configured to attach the cell stack to the cooler while pressing an opposed surface of the viscous body layer facing the cooled portion of the cell stack with the cooled portion, before hardening of the viscous body layer on the cooler is completed.

In the viscous body layer forming device of this battery pack manufacturing apparatus, the opening of the discharge port of the nozzle is shaped so as to protrude in an arc shape having a central angle within a range of 10° to 35° toward the downstream side in the film formation direction. Discharging a coating liquid from this discharge port can form the viscous body layer such that the opposed surface facing the cooled portion of the cell stack protrudes in an arc shape having a central angle within a range of 10° to 35° as seen in a sectional view from the film formation direction. In the process of being squeezed, the viscous body layer thus formed gradually increases the area of contact with the cooled portion of the cell stack while pushing out air toward both sides with respect to the vertex of the arc of the opposed surface of the viscous body layer. Thus, entrapment of air between the cooled portion of the cell stack and the viscous body layer can be reduced.

In the second aspect, the opening of the discharge port may be in the arc shape having the central angle within a range of 20° to 35°. With the discharge port of the nozzle thus configured, entrapment of air between the cooled portion of the cell stack and the viscous body layer can be reduced more favorably.

The present invention can reduce entrapment of air between a cooled portion of a cell stack and a viscous body layer.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an exploded perspective view showing the general configuration of a battery pack manufactured by a battery pack manufacturing method according to an embodiment;
FIG. 2 is a schematic view showing the general configuration of a battery pack manufacturing apparatus used in the battery pack manufacturing method according to the embodiment;
FIG. 3 is a flowchart showing the flow of processing in the battery pack manufacturing method according to the embodiment;
FIG. 4 is a schematic view illustrating details of a viscous body layer forming step in the battery pack manufacturing method according to the embodiment;
FIG. 5 is a schematic view illustrating details of the viscous body layer forming step in the battery pack manufacturing method according to the embodiment;
FIG. 6 is a schematic view illustrating details of the viscous body layer forming step in the battery pack manufacturing method according to the embodiment;
FIG. 7 is a schematic view showing viscous body layers formed on coolers by the viscous body layer forming step;
FIG. 8 is a sectional view taken along line VIII-VIII in FIG. 7;
FIG. 9 is a schematic view illustrating details of a cell stack mounting step in the battery pack manufacturing method according to the embodiment;
FIG. 10 is a schematic view illustrating details of the cell stack mounting step in the battery pack manufacturing method according to the embodiment;
FIG. 11 is a schematic view illustrating details of the cell stack mounting step in the battery pack manufacturing method according to the embodiment;
FIG. 12 is a schematic view showing details of a configuration around the viscous body layer in the battery pack manufactured by the battery pack manufacturing method according to the embodiment;
FIG. 13A is a schematic view illustrating a battery pack manufacturing method according to a comparative example;
FIG. 13B is a schematic view illustrating the battery pack manufacturing method according to the comparative example;
FIG. 13C is a schematic view illustrating the battery pack manufacturing method according to the comparative example;
FIG. 14 is a schematic view illustrating the procedure of a test that confirmed effects of the battery pack manufacturing method according to the embodiment;
FIG. 15 is a schematic view showing the configuration of a mounting device used in the test;
FIG. 16 is a schematic view showing a state where an acrylic plate is pressed against a viscous body layer in the test; and
FIG. 17 is a table showing the result of the test.

### DETAILED DESCRIPTION OF EMBODIMENTS

An embodiment of the present invention will be described below with reference to the drawings. Where appropriate, the following description and the drawings are abbreviated and simplified for clarity. The same components in the drawings are denoted by the same reference signs, while redundant description thereof is omitted as necessary. The right-handed xyz-coordinate system shown in the drawings is for the convenience of illustrating the positional relationships of the components.

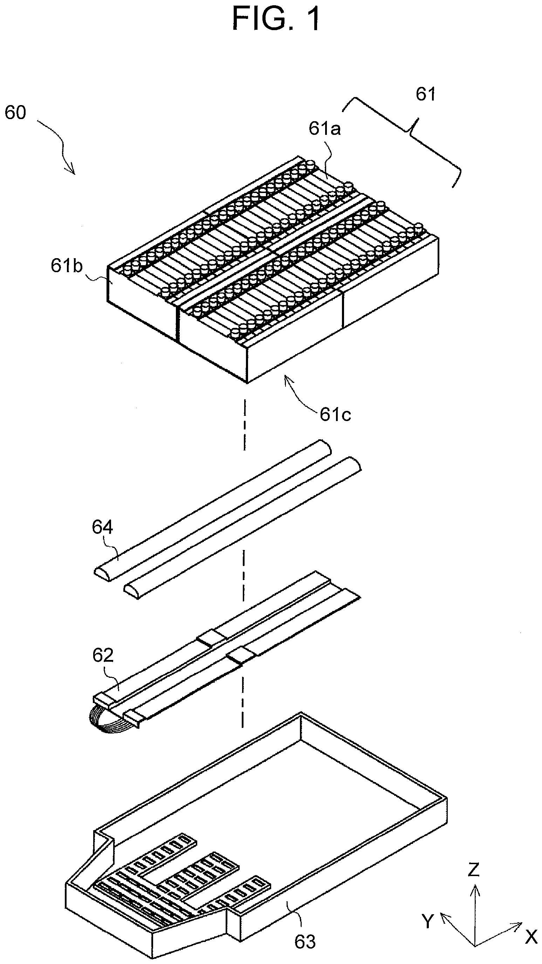

First, the general configuration of a battery pack manufactured by a battery pack manufacturing method according to the embodiment will be described with reference to FIG. 1. FIG. 1 is an exploded perspective view showing the general configuration of a battery pack 60. As shown in FIG. 1, the battery pack 60 includes a cell stack 61, coolers 62, and a lower case 63.

The cell stack 61 has a configuration in which a plurality of single cells 61a is stacked in a long-side direction (X-axis direction). Here, for example, the single cell 61a is a secondary battery, such as a lithium-ion battery or a nickel-metal hydride battery. The single cells 61a are electrically connected in series by a bus bar etc. The cell stack 61 is at least partially covered by a resin frame 61b.

The cooler 62 is a device that cools the cell stack 61, and has a substantially rectangular parallelepiped shape elongated along a stacking direction of the single cells 61a (X-axis direction). On a surface of the cooler 62 facing the cell stack 61, a viscous body layer 64 elongated along the stacking direction of the single cells 61a (X-axis direction) is formed. The shape of the viscous body layer 64 will be described in detail later. A cooled portion 61c that is at least a part of a surface of the cell stack 61 extending along the stacking direction of the single cells 61a (X-axis direction) is mounted on the cooler 62, with the viscous body layer 64 interposed between the cooled portion 61c and the cooler 62. The lower case 63 is a case that houses the cell stack 61 mounted on the cooler 62 with the viscous body layer 64 interposed between the cell stack 61 and the cooler 62.

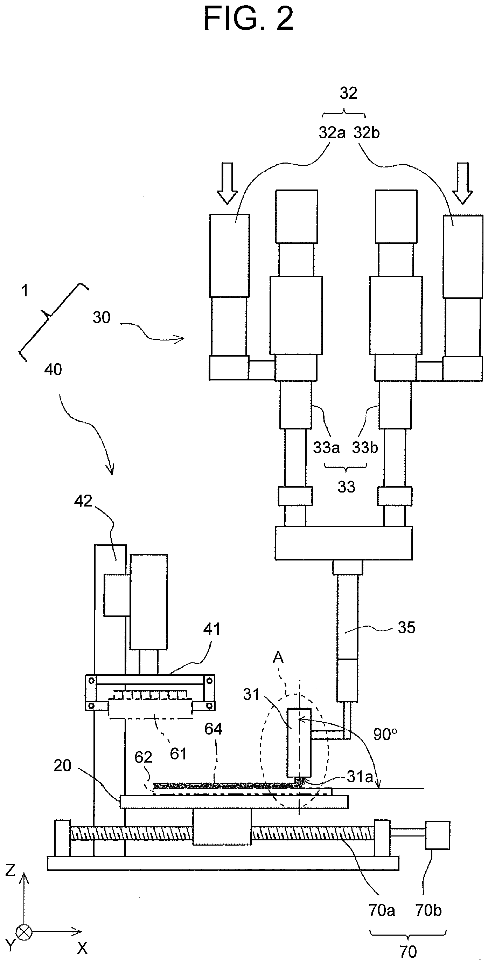

Next, the general configuration of a battery pack manufacturing apparatus 1 used in the battery pack manufacturing method according to the embodiment will be described with reference to FIG. 2. FIG. 2 is a schematic view showing the general configuration of the battery pack manufacturing apparatus 1. As shown in FIG. 2, the battery pack manufacturing apparatus 1 includes a viscous body layer forming device 30 and a mounting device 40 (attaching device).

The viscous body layer forming device 30 is a device that forms the viscous body layer 64 on the surface of the cooler 62 facing the cell stack 61. The viscous body layer forming device 30 includes a coating liquid storage 32, a dispenser 33, a static mixer 35, a nozzle 31, and a stage 20. In this embodiment, a type of coating liquid that is obtained by mixing two materials, a base compound and a hardening agent, (two-component mixed coating liquid) is used as the coating liquid for forming the viscous body layer 64. The coating liquid is made of a resin having viscoelasticity, for example, a silicon-based resin. The coating liquid storage 32 is a tank that stores the materials of the coating liquid, and is composed of a first coating liquid storage 32a that stores the base compound and a second coating liquid storage 32b that stores the hardening agent.

The dispenser 33 is a device that suctions the materials of the coating liquid from the coating liquid storage 32 and supplies the materials in predetermined amounts to the static mixer 35 to be described later. The dispenser 33 is composed of a first dispenser 33a and a second dispenser 33b. The first dispenser 33a suctions the base compound of the coating liquid from the first coating liquid storage 32a and supplies the base compound in predetermined amounts to the static mixer 35. Similarly, the second dispenser 33b suctions the hardening agent of the coating liquid from the second coating liquid storage 32b and supplies the hardening agent in predetermined amounts to the static mixer 35.

The static mixer 35 is a device that stirs and mixes the materials of the coating liquid supplied from the dispenser 33. The static mixer 35 has no driving unit, and a plurality of elements having a twisted part is spirally formed inside the static mixer 35. Through the arrangement of these elements, the materials of the coating liquid having entered inside the static mixer 35 are sequentially stirred and mixed to produce the coating liquid. The produced coating liquid is delivered to the nozzle 31.

The nozzle 31 is a flat nozzle that can discharge the coating liquid in a ribbon shape onto the cooler 62 to be coated. The nozzle 31 has a discharge port 31a from which the coating liquid is discharged. The nozzle 31 is disposed such that the discharge direction of the coating liquid is oriented at 90° to a surface to be coated. The shape of the discharge port 31a will be described later. The nozzle 31 includes a flow rate adjustment mechanism that adjusts the amount of coating liquid to be discharged.

The stage 20 is a part on which the cooler 62 is placed. The stage 20 includes a driving mechanism 70. For example, having a ball screw 70a and a servomotor 70b that drives the ball screw 70a to rotate, the driving mechanism 70 can move the stage 20 so as to reciprocate in the X-axis direction. Thus, the coating liquid can be applied to the cooler 62 placed on the stage 20 at a predetermined application speed, to form the viscous body layer 64 on the surface of the cooler 62. Alternatively, the viscous body layer forming device 30 may be configured to apply the coating liquid by moving the nozzle 31 while the stage 20 is fixed.

The mounting device 40 is a device that disposes the cell stack 61 onto the viscous body layer 64 formed on the cooler 62. The mounting device 40 includes a grabber unit 41 and a conveyor unit 42. The grabber unit 41 is configured to be able to grab the cell stack 61. Specifically, the grabber unit 41 includes a pair of fingers and an actuator (such as a servomotor) that drives the fingers. The conveyor unit 42 conveys the cell stack 61 grabbed by the grabber unit 41 to a predetermined position at which the cell stack 61 faces the viscous body layer 64, and disposes the cell stack 61 onto the viscous body layer 64. For example, the conveyor unit 42 is configured to be able to shift in the directions of three axes by an actuator, a combination of a ball screw and a motor, etc.

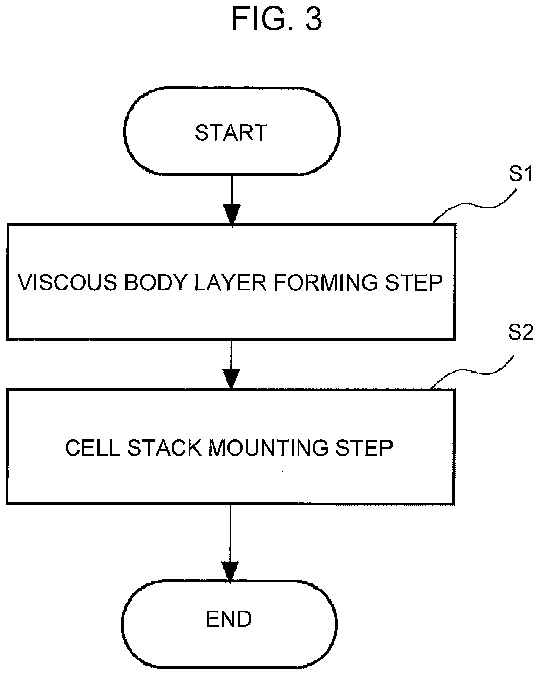

Next, the battery pack manufacturing method according to the embodiment will be described. For the configuration of the battery pack manufacturing apparatus 1, FIG. 2 will be referred to as necessary in the following description. FIG. 3 is a flowchart showing the flow of processing in the battery pack manufacturing method according to the embodiment. As shown in FIG. 3, first, a viscous body layer forming step of forming the viscous body layer on the cooler 62 by the viscous body layer forming device 30 of the battery pack manufacturing apparatus 1 is performed (step S1). Then, before hardening of the viscous body layer 64 formed on the cooler 62 is completed, a cell stack mounting step (attaching step) of mounting the cell stack 61 onto the cooler 62 by the mounting device 40 of the battery pack manufacturing apparatus 1 is performed (step S2).

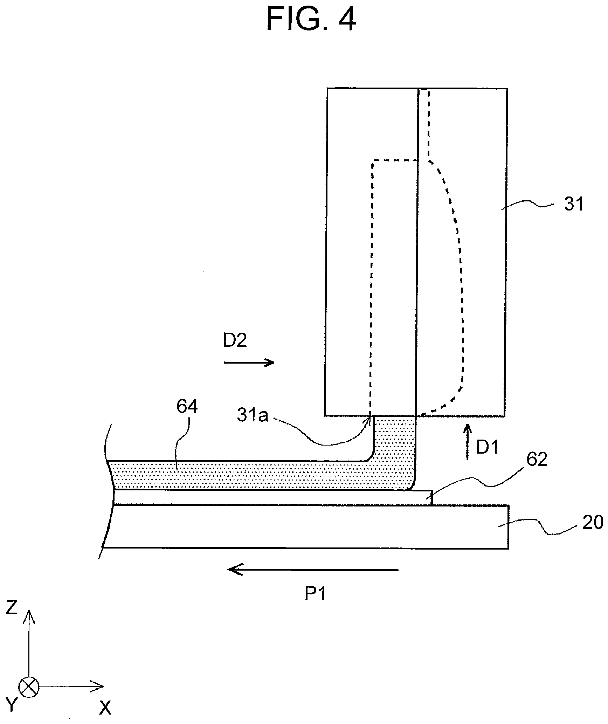

FIG. 4 to FIG. 6 are schematic views illustrating details of the viscous body layer forming step. As shown in FIG. 4, when the coating liquid is discharged from the discharge port 31a while the stage 20 is moved in the direction of an arrow P1 (toward a negative side in the X-axis direction) at a predetermined moving speed, the viscous body layer 64 is formed on the cooler 62 at a predetermined application speed (film formation speed). Here, the application speed is equal to the moving speed of the stage 20.

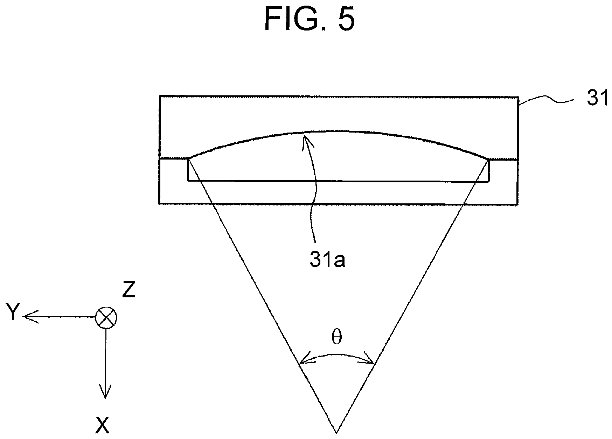

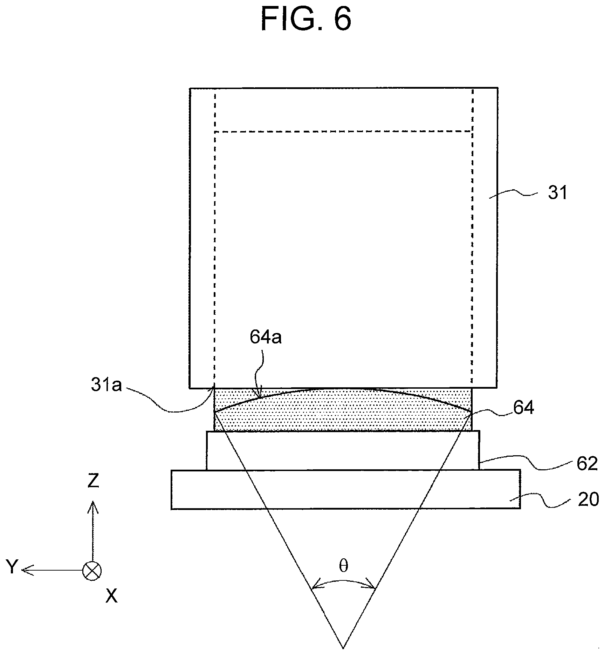

FIG. 5 is a view from the direction of an arrow D1 in FIG. 4. As shown in FIG. 5, the opening of the discharge port 31a of the nozzle 31 of the viscous body layer forming device 30 is shaped so as to protrude in an arc shape having a central angle θ of not smaller than 10° but smaller than 35° toward a downstream side in a film formation direction (the negative side in the X-axis direction). In other words, the opening of the discharge port 31a is shaped so as to protrude in an arc shape having the central angle θ of not smaller than 10° but smaller than 35° toward the downstream side in the film formation direction (the negative side in the X-axis direction), in a state where the discharge port 31a faces the cooler 62. The "arc shape" here is not limited to an arc of an exact circle but also includes a slightly deformed arc and an arc having more than one center points. FIG. 6 is a view from the direction of an arrow D2 in FIG. 4. Since the opening of the discharge port 31a is shaped as shown in FIG. 5, as shown in FIG. 6, an opposed surface 64a of the viscous body layer 64 discharged from the discharge port 31a onto the cooler 62 that is a surface on the side facing the cooled portion, protrudes in an arc shape having a central angle of not smaller than 10° but smaller than 35° as seen in a sectional view of the viscous body layer 64 from the film formation direction.

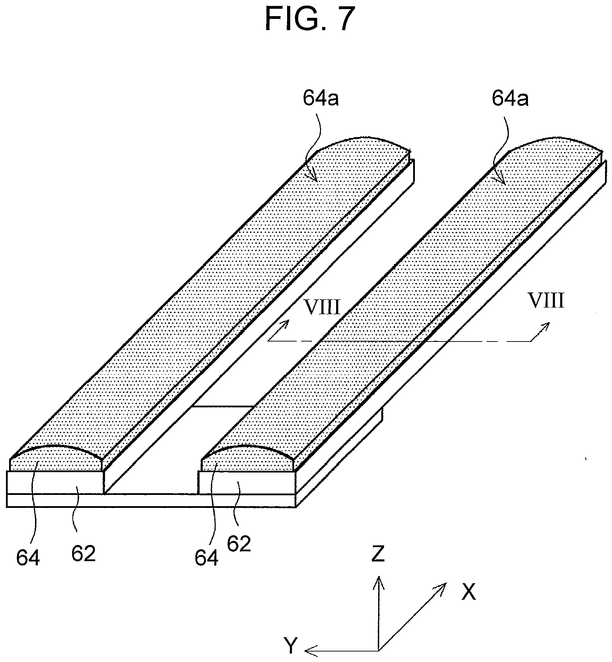

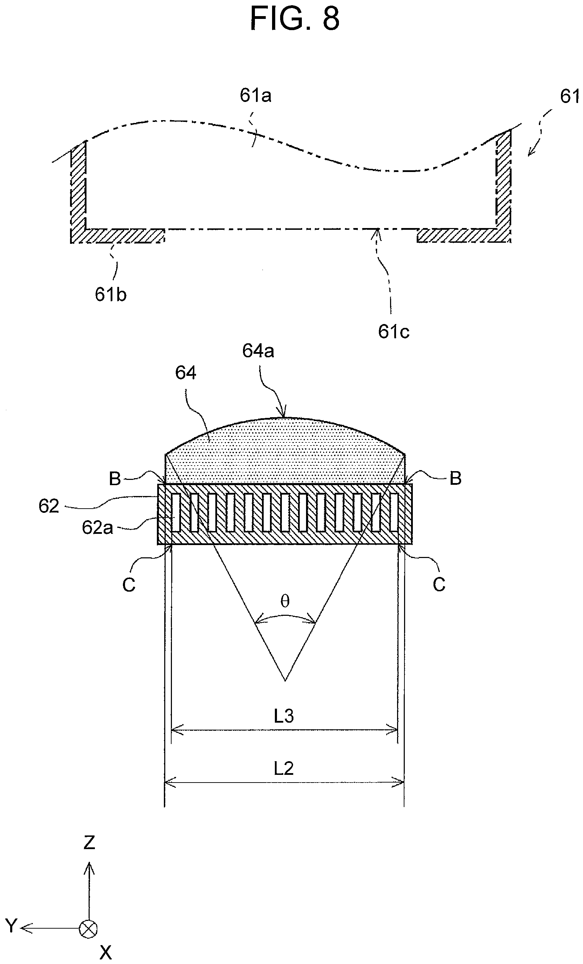

FIG. 7 is a schematic view showing the viscous body layers 64 formed on the coolers 62 by the viscous body layer forming step. FIG. 8 is a sectional view taken along line VIII-VIII in FIG. 7. As shown in FIG. 7 and FIG. 8, the viscous body layer 64 can be formed such that the opposed surface 64a of the viscous body layer 64 that is the surface on the side facing the cooled portion 61c of the cell stack 61 protrudes in an arc shape having a central angle of not smaller than 10° but smaller than 35° as seen in a sectional view of the viscous body layer 64 from the long-side direction (film formation direction). This means that the viscous body layer 64 is formed such that the opposed surface 64a has a vertex at which a perpendicular distance from a surface on the opposite side from the opposed surface 64a is longest, and that this perpendicular distance decreases continuously and monotonically in directions away from the vertex, as seen in a sectional view of the viscous body layer 64 from the long-side direction.

It is preferable that the opposed surface 64a of the viscous body layer 64 protrude in an arc shape having a central angle of larger than 20° but smaller than 35° as seen in a sectional view of the viscous body layer 64 from the long-side direction (film formation direction). In other words, it is preferable that the opening of the discharge port 31a (see FIG. 5) of the nozzle 31 of the viscous body layer forming device 30 be shaped so as to protrude in an arc shape having the central angle θ of larger than 20° but smaller than 35° toward the downstream side in the film formation direction (the negative side in the X-axis direction).

As shown in FIG. 8, the cooler 62 has refrigerant flow passage 62a inside. The refrigerant flow passage 62a may include a plurality of refrigerant flow passage. To allow cooling energy in the refrigerant flow passage 62a to be reliably delivered to the viscous body layer 64, it is preferable that a width B-B (L2), in a direction parallel to a short side (Y-axis direction), of the surface of the viscous body layer 64 to be formed on the cooler 62 that is the surface in contact with the cooler 62 be greater than a width C-C (L3), in the direction parallel to the short side (Y-axis direction), of a part at which the refrigerant flow passage 62a is present inside the cooler 62 (L2 > L3).

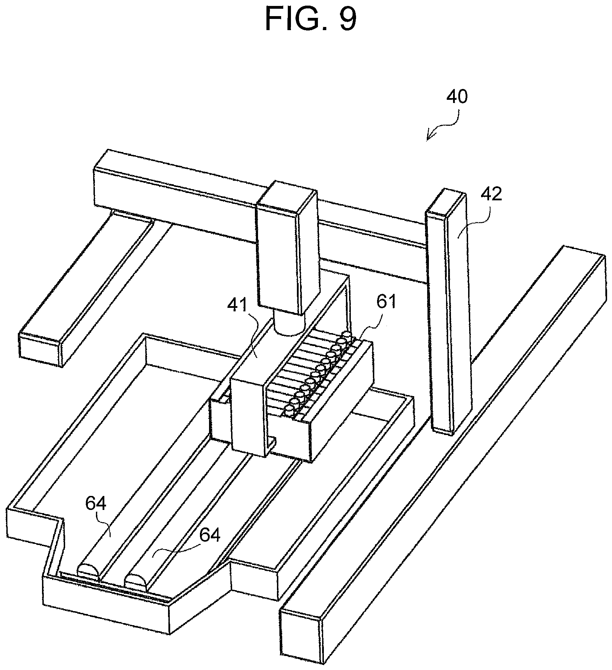

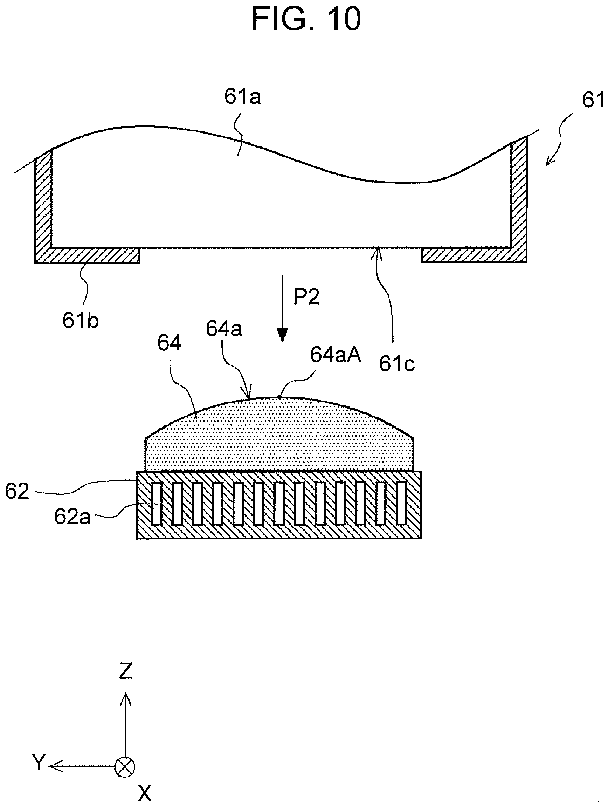

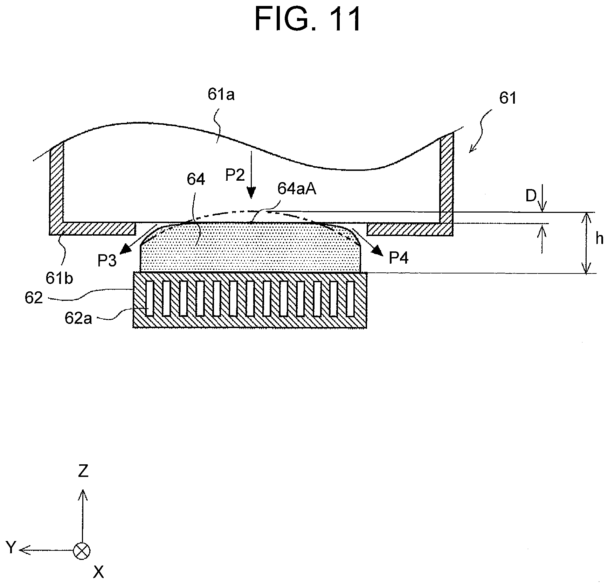

FIG. 9 to FIG. 11 are schematic views illustrating details of the cell stack mounting step. FIG. 10 and FIG. 11 correspond to FIG. 8. As shown in FIG. 9, in the cell stack mounting step, the cell stack 61 is grabbed by the grabber unit 41 of the mounting device 40, and is conveyed by the conveyor unit 42 to a position at which the cooled portion 61c of the cell stack 61 faces the viscous body layer 64.

Then, as shown in FIG. 10, the position of the cell stack 61 is moved in the direction of an arrow P2 (toward a negative side in a Z-axis direction) by the conveyor unit 42, and the cooled portion 61c of the cell stack 61 is brought into contact with the opposed surface 64a of the viscous body layer 64. Here, a vertex 64aA of the arc of the opposed surface 64a of the viscous body layer 64 comes in contact with the cooled portion 61c of the cell stack 61 first. Since the cooled portion 61c is not covered by the resin frame 61b, the cooled portion 61c can be brought into direct contact with the opposed surface 64a of the viscous body layer 64. While the vertex 64aA of the arc is located at the center of the viscous body layer 64 in the Y-axis direction in FIG. 10, the vertex 64aA may be located at an off-center position.

Then, as shown in FIG. 11, the opposed surface 64a of the viscous body layer 64 is pressed with the cooled portion 61c of the cell stack 61, and thus the viscous body layer 64 is squeezed until a ratio of squeezing X reaches a desired value. Here, the ratio of squeezing X is expressed by X = D / h × 100 [%], where D is the amount of viscous body layer 64 squeezed by pressing (the length of the viscous body layer 64 squeezed in a pressing direction), and h is the thickness of the viscous body layer 64 before the viscous body layer 64 is pressed.

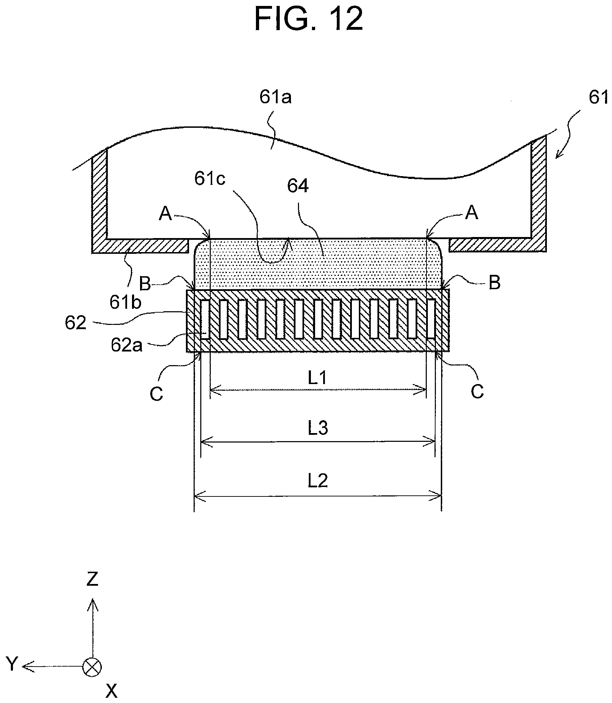

FIG. 12 is a schematic view showing details of the configuration around the viscous body layer 64 in the battery pack 60 manufactured by the battery pack manufacturing method according to the embodiment. FIG. 12 corresponds to FIG. 8. As shown in FIG. 12, a width A-A (L1, first width), in the direction parallel to the short side (Y-axis direction), of the surface of the viscous body layer 64 in contact with the cooled portion 61c is set to be less than the width B-B (L2, second width), in the direction parallel to the short side, of the surface of the viscous body layer 64 in contact with the cooler 62. The ratio of squeezing X is set to such a value that the ratio of the width A-A (L1) to the width B-B (L2) (L1 / L2 × 100 [%]) is within a range of not lower than 90% but lower than 100%. Thus, the viscous body layer 64 is squeezed until being substantially rectangular as seen in a sectional view of the viscous body layer 64 from the X-axis direction.

As described above, in a state before mounting, the viscous body layer 64 is formed such that the opposed surface faces the cooled portion 61c protrudes in an arc shape having a central angle of not smaller than 10° but smaller than 35° as seen in a sectional view from the direction parallel to the long side of the surface of the viscous body layer 64 in contact with the cooler 62 (X-axis direction). Thus, entrapment of air between the viscous body layer and the cooled portion is reduced to such a level as not to cause trouble in practical use. As a result, a decrease in cooling efficiency attributable to entrapment of air between the viscous body layer and the cooled portion can be avoided.

In a state after mounting, the ratio of the width, in the direction parallel to the short side (Y-axis direction), of the surface of the viscous body layer 64 in contact with the cooled portion 61c to the width, in the direction parallel to the short side (Y-axis direction), of the surface of the viscous body layer 64 in contact with the cooler 62 is not lower than 90% but lower than 100%. When the viscous body layer is thus formed, the viscous body layer is unlikely to flow down onto both sides of the cooler, and moreover, the cooling energy supplied from the refrigerant flow passages can be reliably delivered from the viscous body layer to the cooled portion.

Further, the viscous body layer 64 may be formed such that, with respect to the width C-C (L3), in the direction parallel to the short side (Y-axis direction), of the part at which the refrigerant flow passage 62a are present inside the cooler 62, the width C-C (L3) is greater than the width A-A (L1) but less than the width B-B (L2) (L1 < L3 < L2). When the viscous body layer 64 is thus formed, the cooling energy in the refrigerant flow passage 62a can be reliably delivered to the viscous body layer 64, and this cooling energy in the refrigerant flow passage 62a can be kept from leaking out. As a result, the cooling efficiency can be improved.

Here, a mechanism of how the battery pack manufacturing method according to the embodiment can reduce entrapment, i.e., catching, of air between the cooled portion of the cell stack and the viscous body layer will be described.

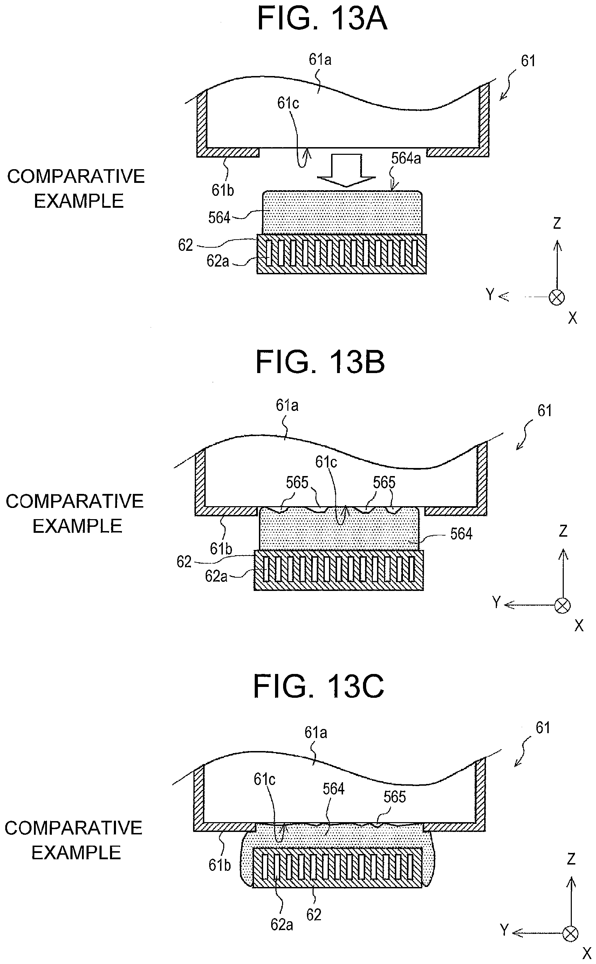

First, a problem that can arise in a manufacturing method according to a comparative example will be described with reference to FIG. 13A to FIG. 13C. FIG. 13A to FIG. 13C are schematic views illustrating the battery pack manufacturing method according to the comparative example. When an opposed surface 564a of a viscous body layer 564 that is a surface on the side facing the cooled portion 61c of the cell stack 61 is flat as shown in FIG. 13A, air is entrapped in the process of bringing the cooled portion 61c of the cell stack 61 into contact with the opposed surface 564a of the viscous body layer 564 as shown in FIG. 13B. As a result, air layers 565 are formed between the viscous body layer 64 and the cell stack 61. The cooling efficiency decreases when the air layers 565 are formed between the viscous body layer 64 and the cell stack 61, as the air layers 565 hinder the exchange of cooling energy between the viscous body layer 64 and the cell stack 61.

When the amount of viscous body layer 564 squeezed is increased as shown in FIG. 13C to expel the air layers 565 from between the viscous body layer 564 and the cell stack 61, some of the air layers 565 can be expelled but the viscous body layer 564 undesirably flows down onto both sides of the cooler 62. When the opposed surface 564a that is the surface on the side facing the cooled portion 61c of the cell stack 61 is flat, increasing the amount of squeezing cannot sufficiently expel the air layers 565.

By contrast, in the battery pack manufacturing method according to the embodiment, as shown in FIG. 10, the opposed surface 64a of the viscous body layer 64 protrudes in an arc shape having a central angle of not smaller than 10° but smaller than 35° as seen in a sectional view of the viscous body layer 64 from the long-side direction (film formation direction). As shown in FIG. 11, therefore, in the process of being squeezed, the viscous body layer 64 gradually increases the area of contact with the cooled portion 61c of the cell stack 61 while pushing out air toward both sides (in the directions indicated by arrows P3, P4) with respect to the vertex 64aA of the arc of the opposed surface 64a of the viscous body layer 64. Thus, entrapment of air between the cooled portion of the cell stack and the viscous body layer can be reduced.

Next, a test that confirmed the effects of the battery pack manufacturing method according to the embodiment will be described below. For the configuration of the battery pack manufacturing apparatus 1, FIG. 2 will be referred to as necessary.

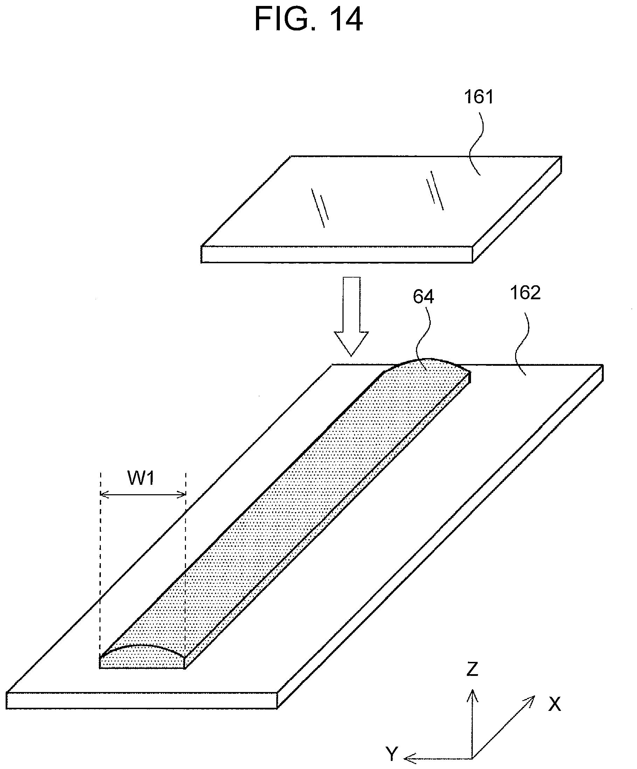

First, the procedure of an experiment will be described. FIG. 14 is a schematic view illustrating the procedure of the experiment. As shown in FIG. 14, in this experiment, an acrylic plate 161 was used as a dummy test piece for the cell stack 61. An aluminum plate 162 was used as a dummy test piece for the cooler 62. The viscous body layer 64 was formed on the aluminum plate 162, and the acrylic plate 161 is disposed on the viscous body layer 64. After the acrylic plate 161 is disposed on the viscous body layer 64, a ratio of air entrapment area was measured. Here, the ratio of air entrapment area is the ratio of the area of a region where air is entrapped to the total area of contact between the viscous body layer 64 and the acrylic plate 161 (including the region where air is entrapped).

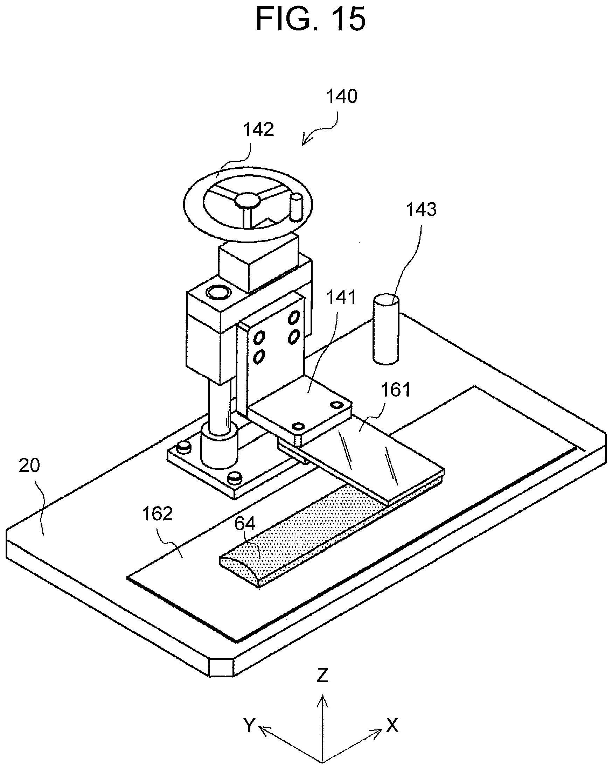

The configuration of the battery pack manufacturing apparatus 1 used in this experiment is basically the same as the configuration of the battery pack manufacturing apparatus 1 shown in FIG. 2, but the mounting device used is simpler than the mounting device 40 of FIG. 2. FIG. 15 is a schematic view showing the configuration of a mounting device 140 used in the experiment. As shown in FIG. 15, the mounting device 140 includes an acrylic plate holding mechanism 141, an elevation mechanism 142, a laser displacement meter 143, and a base 144. The acrylic plate holding mechanism 141 is a device that holds the acrylic plate 161. The acrylic plate holding mechanism 141 is mounted on the elevation mechanism 142. The elevation mechanism 142 is a device that moves the acrylic plate holding mechanism 141 upward and downward. Thus, the acrylic plate 161 held by the acrylic plate holding mechanism 141 is moved downward by the elevation mechanism 142, and the acrylic plate 161 is pressed against the viscous body layer 64 formed on the aluminum plate 162. The laser displacement meter 143 is an instrument that measures the ratio of air entrapment area, and is disposed on an upper side of the acrylic plate 161. The base 144 is a platform on which the aluminum plate 162 with the viscous body layer 64 formed thereon is placed, and the elevation mechanism 142 is installed on the base 144.

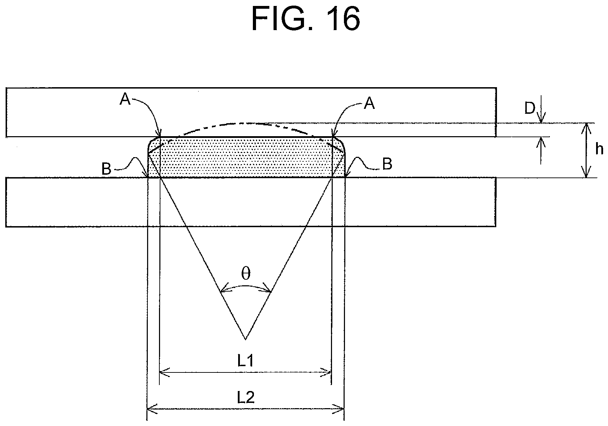

FIG. 16 is a schematic view showing a state where the acrylic plate 161 is pressed against the viscous body layer 64. As shown in FIG. 16, the width, in the direction parallel to the short side (Y-axis direction), of the surface of the viscous body layer 64 in contact with the acrylic plate 161 is defined as a width A-A (L1), and the width, in the direction parallel to the short side, of the surface of the viscous body layer 64 in contact with the aluminum plate 162 is defined as a width B-B (L2) (these widths correspond to the width A-A and the width B-B in FIG. 12).

In this experiment, an evaluation was made for five cases in which the central angle θ of the viscous body layer 64 as seen in a sectional view from the long-side direction (X-axis direction) (hereinafter referred to as the arc central angle θ) was 0° (flat), 10°, 20°, 30°, and 40°, respectively. The ratio of squeezing X (X = D / h × 100 [%]) was set such that, at each of these arc central angles, the ratio of the width A-A (L1) to the width B-B (L2) (L1 / L2× 100 [%]) was in the range of not lower than 90% but lower than 100%. Since the ratio of the width A-A (L1) to the width B-B (L2) is 100% in a state where the opposed surface is not squeezed, the evaluation was made based on this ratio being 100% in the case where the arc central angle θ is 0°.

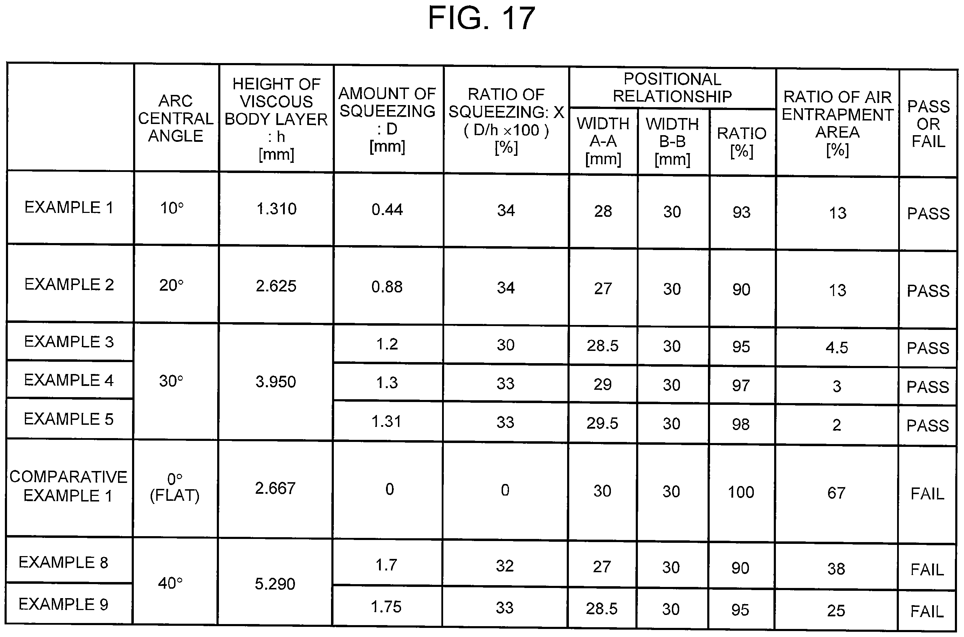

FIG. 17 is a table showing the result of the experiment. In FIG. 17, Example 1, Example 2, Examples 3 to 5, Examples 6, 7, and Examples 8, 9 represent the results of the cases where the arc central angle θ is 10°, 20°, 30°, 35°, and 40°, respectively. Comparative Example 1 represents the result of the case where the arc central angle θ is 0° (flat). As shown in FIG. 17, the ratio of air entrapment area is 67% in Comparative Example 1 in which the arc central angle θ is 0° (flat). By contrast, the ratios of air entrapment area in Examples 1 to 9 are lower than the value in Comparative Example 1. This result confirms that air entrapment in Examples 1 to 9 is reduced compared with that in Comparative Example 1.

In Examples 1 to 5, the ratios of air entrapment area are not higher than 15%. This result confirms that air entrapment can be favorably reduced when the arc central angle θ is within the range of not smaller than 10° but smaller than 35°. Moreover, when the arc central angle θ is 30° as shown in Examples 3 to 5, the ratios of air entrapment area are not higher than 5%. This result confirms that air entrapment can be especially favorably reduced when the arc central angle θ is 30°. When the arc central angle θ is 35° or larger, the ratios of air entrapment area are much higher than 15%. A possible explanation for this result is that a significant distortion occurred in the viscous body layer in the process of squeezing the viscous body layer. Specifically, it is presumed that, when the arc central angle θ is 35° or larger, air cannot be sufficiently pushed out toward both sides of the viscous body layer due to the distortion caused in the viscous body layer, resulting in a large amount of air being entrapped.

As has been described above, the battery pack manufacturing method according to the embodiment can reduce entrapment of air between the cooled portion of the cell stack and the viscous body layer.

The present invention is not limited to the above embodiment but can be modified as necessary within the scope of the gist of the invention. In the embodiment, the configuration in which the cell stack 61 includes the resin frame 61b (see FIG. 1) has been described. However, the present invention is not limited to this example, and the battery pack may have a configuration in which the cell stack does not include the resin frame.

In the embodiment, the opposed surface of the viscous body layer that is the surface on the side facing the cooled portion of the cell stack has been described as having an arc shape as seen in a sectional view of the viscous body layer from the film formation direction. However, the present invention is not limited to this example. The opposed surface of the viscous body layer may have any shape, provided that the opposed surface has a vertex at which the perpendicular distance from the surface on the opposite side from the opposed surface is longest, and that this perpendicular distance decreases continuously and monotonically in the directions away from the vertex, as seen in a sectional view of the viscous body layer from the film formation direction. For example, the opposed surface may have a shape of an elliptical arc or an inverted V-shape as seen in a sectional view of the viscous body layer from the film formation direction. Moreover, the opposed surface of the viscous body layer that is the surface on the side facing the cooled portion of the cell stack may protrude in an arc shape having a central angle of 35° or larger as seen in a sectional view of the viscous body layer from the long-side direction.

## Claims

1. A manufacturing method of a battery pack (60) which includes a cell stack (61) that is a stack of a plurality of single cells (61a) and a cooler (62) that includes a refrigerant flow passage (62a), and in which a cooled portion (61c) that is at least a part of a surface of the cell stack (61) extending along a stacking direction of the single cells (61a) is attached to the cooler (62), with a viscous body layer (64) interposed between the cooled portion (61c) and the cooler (62), the manufacturing method comprising:
forming the viscous body layer (64) on the cooler (62) such that an opposed surface (64a) of the viscous body layer (64) facing the cooled portion (61c) has a vertex at which a perpendicular distance from a surface of the viscous body layer (64) opposed to the opposed surface (64a) is longest, and that the perpendicular distance decreases continuously and monotonically in directions away from the vertex, as seen in a sectional view of the viscous body layer (64) from a long-side direction of the viscous body layer (64); and
before hardening of the viscous body layer (64) on the cooler (62) is completed, attaching the cell stack (61) to the cooler (62) while pressing the opposed surface (64a) with the cooled portion (61c).

2. The manufacturing method of the battery pack (60) according to claim 1, wherein, in forming the viscous body layer (64), the viscous body layer (64) is formed on the cooler (62) such that the opposed surface (64a) protrudes in an arc shape having a central angle within a range of 10° to 35°, as seen in the sectional view.

3. The manufacturing method of the battery pack (60) according to claim 2, wherein the viscous body layer (64) is formed on the cooler (62) such that the opposed surface (64a) protrudes in the arc shape having the central angle within a range of 20° to 35° as seen in the sectional view.

4. A manufacturing apparatus (1) of a battery pack (60) which includes a cell stack (61) that is a stack of a plurality of single cells (61a) and a cooler (62) that includes a refrigerant flow passage (62a), and in which a cooled portion (61c) that is at least a part of a surface of the cell stack (61) extending along a stacking direction of the single cells (61a) is attached to the cooler (62), with a viscous body layer (64) interposed between the cooled portion (61c) and the cooler (62), the manufacturing apparatus comprising:
a viscous body layer forming device (30) configured to form the viscous body layer (64) on the cooler (62) by discharging a viscous body from a nozzle (31), an opening of a discharge port (31a) of the nozzle (31) being in an arc shape having a central angle within a range of 10° to 35° toward a downstream side in a film formation direction in forming the viscous body layer (64); and
an attaching device (40) configured to attach the cell stack (61) to the cooler (62) while pressing an opposed surface (64a) of the viscous body layer (64) facing the cooled portion (61c) of the cell stack (61) with the cooled portion (61c), before hardening of the viscous body layer (64) on the cooler (62) is completed.

5. The manufacturing apparatus (1) of the battery pack (60) according to claim 4, wherein the opening of the discharge port (31a) is in the arc shape having the central angle within a range of 20° to 35°.

## Patentansprüche

1. Herstellungsverfahren eines Akkusatzes (60), der einen Zellstapel (61), der ein Stapel aus einer Mehrzahl von Einzelzellen (61a) ist, und einen Kühler (62) enthält, der einen Kühlmittelflusskanal (62a) enthält, und in dem ein gekühlter Abschnitt (61c), der zumindest ein Teil einer Oberfläche des Zellenstapels (61) ist, die sich entlang einer Stapelrichtung der Einzelzellen (61a) erstreckt, an dem Kühler (62) befestigt ist, wobei zwischen dem gekühlten Abschnitt (61c) und dem Kühler (62) eine viskose Körperschicht (64) angeordnet ist, wobei das Herstellungsverfahren umfasst:
Ausbilden der viskosen Körperschicht (64) auf dem Kühler (62), sodass eine gegenüberliegende Oberfläche (64a) der viskosen Körperschicht (64), die dem gekühlten Abschnitt (61c) zugewandt ist, einen Scheitelpunkt aufweist, an dem ein senkrechter Abstand von einer Oberfläche der viskosen Körperschicht (64), die der gegenüberliegenden Oberfläche (64a) gegenüberliegt, am längsten ist, und sodass der senkrechte Abstand kontinuierlich und monoton in Richtungen von dem Scheitelpunkt weg fällt, wie in einer Schnittansicht der viskosen Körperschicht (64) von einer Längsseitenrichtung der viskosen Körperschicht (64) aus gesehen; und
bevor das Härten der viskosen Körperschicht (64) auf dem Kühler (62) abgeschlossen ist, Befestigen des Zellenstapels (61) an dem Kühler (62), während die gegenüberliegende Oberfläche (64a) mit dem gekühlten Abschnitt (61c) gedrückt wird.

2. Herstellungsverfahren des Akkusatzes (60) nach Anspruch 1, wobei bei dem Ausbilden der viskosen Körperschicht (64) die viskose Körperschicht (64) auf dem Kühler (62) ausgebildet wird, sodass die gegenüberliegende Oberfläche (64a) in einer Bogenform mit einem zentralen Winkel in einem Bereich von 10° bis 35° vorsteht, wie in der Schnittansicht gesehen.

3. Herstellungsverfahren des Akkusatzes (60) nach Anspruch 2, wobei die viskose Körperschicht (64) auf dem Kühler (62) ausgebildet wird, sodass die gegenüberliegende Oberfläche (64a) in der Bogenform mit dem zentralen Winkel in einem Bereich von 20° bis 35° vorsteht, wie in der Schnittansicht gesehen.

4. Herstellungsvorrichtung (1) für einen Akkusatz (60), der einen Zellstapel (61), der ein Stapel aus einer Mehrzahl von Einzelzellen (61a) ist, und einen Kühler (62) enthält, der einen Kühlmittelflusskanal (62a) enthält, und in dem ein gekühlter Abschnitt (61c), der zumindest ein Teil einer Oberfläche des Zellenstapels (61) ist, die sich entlang einer Stapelrichtung der Einzelzellen (61a) erstreckt, an dem Kühler (62) befestigt ist, wobei zwischen dem gekühlten Abschnitt (61c) und dem Kühler (62) eine viskose Körperschicht (64) angeordnet ist, wobei die Herstellungsvorrichtung umfasst:
eine Ausbildungsvorrichtung (30) für eine viskose Körperschicht, die konfiguriert ist, um die viskose Körperschicht (64) auf dem Kühler (62) durch das Ausstoßen eines viskosen Körpers aus einer Düse (31) auszubilden, wobei eine Öffnung einer Ausstoßauslassöffnung (31a) der Düse (31) in einer Bogenform mit einem zentralen Winkel in einem Bereich von 10° bis 35° zu einer stromabwärtigen Seite in einer Folienausbildungsrichtung beim Ausbilden der viskosen Körperschicht (64) vorliegt; und
eine Befestigungsvorrichtung (40), die konfiguriert ist, um den Zellstapel (61) an dem Kühler (62) zu befestigen, während eine gegenüberliegende Oberfläche (64a) der viskosen Körperschicht (64), die dem gekühlten Abschnitt (61c) des Zellstapels (61) zugewandt ist, mit dem gekühlten Abschnitt (61c) gedrückt wird, bevor das Härten der viskosen Körperschicht (64) auf dem Kühler (62) abgeschlossen ist.

5. Herstellungsvorrichtung (1) für den Akkusatz (60) nach Anspruch 4, wobei die Öffnung der Ausstoßauslassöffnung (31a) in der Bogenform mit dem zentralen Winkel in einem Bereich von 20° bis 35° vorliegt.

## Revendications

1. Procédé de fabrication d'un bloc batterie (60) qui inclut un empilement de cellules (61), qui est un empilement d'une pluralité de cellules uniques (61a), et un refroidisseur (62), qui inclut un passage d'écoulement de réfrigérant (62a), et dans lequel une portion refroidie (61c), qui est au moins une partie d'une surface de l'empilement de cellules (61) s'étendant le long d'une direction d'empilement des cellules uniques (61a), est attachée au refroidisseur (62), avec une couche de corps visqueux (64) interposée entre la portion refroidie (61c) et le refroidisseur (62), le procédé de fabrication comprenant :
la formation de la couche de corps visqueux (64) sur le refroidisseur (62) de telle sorte qu'une surface opposée (64a) de la couche de corps visqueux (64) faisant face à la portion refroidie (61c) ait un sommet auquel une distance perpendiculaire depuis une surface de la couche de corps visqueux (64) opposée à la surface opposée (64a) est la plus longue, et que la distance perpendiculaire se réduise en continu et de façon monotone dans des directions à l'opposé du sommet, en vue sur une vue en coupe de la couche de corps visqueux (64) depuis une direction de côté long de la couche de corps visqueux (64) ; et
avant que le durcissement de la couche de corps visqueux (64) sur le refroidisseur (62) soit achevé, l'attache de l'empilement de cellules (61) au refroidisseur (62) tout en pressant la surface opposée (64a) avec la portion refroidie (61c).

2. Procédé de fabrication du bloc batterie (60) selon la revendication 1, dans lequel, dans la formation de la couche de corps visqueux (64), la couche de corps visqueux (64) est formée sur le refroidisseur (62) de telle sorte que la surface opposée (64a) fasse saillie en une forme d'arc ayant un angle central au sein d'une plage de 10° à 35°, en vue sur la vue en coupe.

3. Procédé de fabrication du bloc batterie (60) selon la revendication 2, dans lequel la couche de corps visqueux (64) est formée sur le refroidisseur (62) de telle sorte que la surface opposée (64a) fasse saillie en la forme d'arc ayant l'angle central au sein d'une plage de 20° à 35° en vue sur la vue en coupe.

4. Appareil de fabrication (1) d'un bloc batterie (60) qui inclut un empilement de cellules (61), qui est un empilement d'une pluralité de cellules uniques (61a), et un refroidisseur (62), qui inclut un passage d'écoulement de réfrigérant (62a), et dans lequel une portion refroidie (61c), qui est au moins une partie d'une surface de l'empilement de cellules (61) s'étendant le long d'une direction d'empilement des cellules uniques (61a), est attachée au refroidisseur (62), avec une couche de corps visqueux (64) interposée entre la portion refroidie (61c) et le refroidisseur (62), l'appareil de fabrication comprenant :
un dispositif de formation de couche de corps visqueux (30) configuré pour former la couche de corps visqueux (64) sur le refroidisseur (62) en débitant un corps visqueux à partir d'une buse (31), une ouverture d'un orifice de débitage (31a) de la buse (31) étant en une forme d'arc ayant un angle central au sein d'une plage de 10° à 35° vers un côté en aval dans une direction de formation de film dans la formation de la couche de corps visqueux (64) ; et
un dispositif d'attache (40) configuré pour attacher l'empilement de cellules (61) au refroidisseur (62) tout en pressant une surface opposée (64a) de la couche de corps visqueux (64) faisant face à la portion refroidie (61c) de l'empilement de cellules (61) avec la portion refroidie (61c), avant que le durcissement de la couche de corps visqueux (64) sur le refroidisseur (62) soit achevé.

5. Appareil de fabrication (1) du bloc batterie (60) selon la revendication 4, dans lequel l'ouverture de l'orifice de débitage (31a) est en la forme d'arc ayant l'angle central au sein d'une plage de 20° à 35°.
